(19) Europäisches Patentamt
European Patent Office
Office européen des brevets

(11) **EP 3 177 898 B1**

(12) **EUROPÄISCHE PATENTSCHRIFT**

(45) Veröffentlichungstag und Bekanntmachung des Hinweises auf die Patenterteilung:
**15.06.2022 Patentblatt 2022/24**

(21) Anmeldenummer: **14753036.4**

(22) Anmeldetag: **05.08.2014**

(51) Internationale Patentklassifikation (IPC):
**G01F 15/00** *(2006.01)* **G06F 1/30** *(2006.01)*
**H04B 5/00** *(2006.01)*

(52) Gemeinsame Patentklassifikation (CPC):
**G01F 15/063; G01F 23/00**

(86) Internationale Anmeldenummer:
**PCT/EP2014/066855**

(87) Internationale Veröffentlichungsnummer:
**WO 2016/019982 (11.02.2016 Gazette 2016/06)**

(54) **VERBINDEVORRICHTUNG**

CONNECTING DEVICE

DISPOSITIF DE CONNEXION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.06.2017 Patentblatt 2017/24**

(73) Patentinhaber: **VEGA Grieshaber KG
77709 Wolfach (DE)**

(72) Erfinder:
• **ALLGAIER, Volker
77716 Haslach (DE)**
• **STAIGER, Holger
78739 Hardt (DE)**

• **MÜLLER, Tobias
78662 Bösingen (DE)**

(74) Vertreter: **Maiwald Patent- und Rechtsanwaltsgesellschaft mbH
Elisenhof
Elisenstraße 3
80335 München (DE)**

(56) Entgegenhaltungen:
EP-A2- 0 695 017        EP-A2- 0 800 252
WO-A1-90/16105          WO-A2-2005/006515
DE-A1-102006 055 897    US-A- 4 297 629
US-A- 5 898 234         US-A- 6 014 100
US-A1- 2009 066 161

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Feld der Erfindung

Die vorliegende Erfindung betrifft das technische Gebiet der Messtechnik, insbesondere der Füllstand- und Grenzstandmesstechnik und Durchflussmesstechnik. Die Erfindung betrifft eine Verbindevorrichtung, ein Feldgerät, ein Verfahren zum Verbinden eines Ausgangsanschlusses mit einem Eingangsanschluss und ein computerlesbares Speichermedium.

Technischer Hintergrund der Erfindung

Die Stromaufnahme elektronischer Geräte und Apparate in eigensicheren Stromkreisen wird oft durch Widerstände in der Zuleitung begrenzt, um einen zündfähigen Funken zu vermeiden. Das Vermeiden eines zündfähigen Funkens kann Explosionen verhindern helfen.

Allerdings begrenzt ein Widerstand in einer elektrischen Leitung auch die maximal mögliche Stromaufnahme von angeschlossenen Geräten. Insbesondere können die mittlere Stromaufnahme und insbesondere die Spitzenstromaufnahme durch Widerstände in den Zuführungsleitungen begrenzt sein. Die Begrenzung der Stromaufnahme führt auch dazu, dass in einem durch mit Widerständen geschützten Gerät im Wesentlichen nur Komponenten verbaut werden können, deren Stromaufnahme und/oder deren Spitzenstromaufnahme unter einem gewissen vorgebbaren maximalen Wert liegen. Jedoch sind Komponenten, die für eine geringe Stromaufnahme ausgelegt sind, aufwändig herzustellen und daher entsprechend mit Kosten verbunden.

US 5,898,234 A und US2009/066161 beschreiben eine Leistungsversorgungseinheit mit einer Batterie, welche bei einem Fehler in der Leistungsversorgung zugeschaltet werden kann.

Zusammenfassung der Erfindung

Es mag somit ein Bedarf bestehen, für einen effizienten Anschluss von Komponenten eines Gerätes an eine Stromversorgung, Spannungsversorgung und/oder Leistungsversorgung zu sorgen.

Dementsprechend werden eine Verbindevorrichtung, ein Feldgerät, ein Verfahren zum Verbinden eines Ausgangsanschlusses mit einem Eingangsanschluss und ein computerlesbares Speichermedium beschrieben.

Der Gegenstand der vorliegenden Erfindung ergibt sich aus den Merkmalen der unabhängigen Patentansprüche. Ausführungsbeispiele der Erfindung werden von den Gegenständen der abhängigen Patentansprüche und der nachfolgenden Beschreibung angegeben.

Gemäß einem Aspekt der vorliegenden Erfindung wird eine Verbindevorrichtung beschrieben, welche einen Eingangsanschluss mit einem Ausgangsanschluss verbindet. Die Verbindevorrichtung weist eine Steuereinrichtung, eine Energiespeichereinrichtung, den Eingangsanschluss und den Ausgangsanschluss auf. Der Eingangsanschluss ist über eine Ladeeinrichtung, beispielsweise einen Laderegler oder eine Strombegrenzung, mit der Energiespeichereinrichtung verbunden. Die Ladeeinrichtung ist eingerichtet, für ein kontrolliertes Laden der Energiespeichereinrichtung zu sorgen, d. h. dafür zu sorgen, dass die Energiespeichereinrichtung kontrolliert geladen wird. Zum Laden mag in

einem Beispiel ein Strom genutzt werden, der über den Eingangsanschluss von einer Stromversorgung, von einer Spannungsversorgung und/oder von einer Leistungsversorgung bereitgestellt wird.

Die Steuereinrichtung ist eingerichtet, das Erreichen eines vorgebbaren Ladezustands der Energiespeichereinrichtung zu erkennen und nach dem Erreichen des vorgebbaren Ladezustands der Energiespeichereinrichtung, beispielsweise durch Messen der Ladung an der Energiespeichereinrichtung, und/oder nach dem Ablauf einer vorgebbaren Zeit, die Energiespeichereinrichtung mit dem Eingangsanschluss zu verbinden. Die Steuereinrichtung ist außerdem dazu eingerichtet, während und/oder nach dem Verbinden der Energiespeichereinrichtung mit dem Eingangsanschluss, den Eingangsanschluss mit dem Ausgangsanschluss zu verbinden.

Erfindungsgemäß wird das Verbinden der Energiespeichereinrichtung mit dem Eingangsanschluss und das Verbinden des Eingangsanschlusses mit dem Ausgangsanschluss mit unterschiedlichen, voneinander unabhängig agierenden Schaltern durchgeführt. In einem nicht erfindungsgemäßen Beispiel mag das Schalten von einem einzigen Schalter und/oder einem Kombischalter durchgeführt werden, wobei das Schalten der Schalter in Abhängigkeit voneinander erfolgen mag. Das Erreichen des Ladezustands und/oder das Schalten der Schalter kann von Systemzuständen wie einer vorhandenen Ladung und/oder einer vorhandenen Spannung an einer vorgebbaren Stelle der Verbindevorrichtung bestimmt werden oder von einem bestimmten Zeitverhalten (Timing) abhängig gemacht werden.

Gemäß einem weiteren Aspekt der vorliegenden Erfindung wird ein Feldgerät bereitgestellt, welches eine Stromversorgung, eine Funkeinrichtung und eine Verbindevorrichtung gemäß der Erfindung aufweist. Die Stromversorgung ist mit dem Eingangsanschluss der Verbindevorrichtung verbunden und die Funkeinrichtung ist mit dem Ausgangsanschluss der Verbindevorrichtung verbunden.

Eine Funkeinrichtung mag eine Einrichtung sein, welche sich durch eine hohe Stromaufnahme auszeichnet. Die Funkeinrichtung kann eine Stromaufnahme oder einen Strombedarf aufweisen, deren Stromspitzen über der Belastungsgrenze von Zuleitungswiderständen liegt, welche zwischen der Stromversorgung und der Verbindevorrichtung angeordnet sind. Ein Beispiel für eine Funkeinrichtung ist ein Bluetoothmodul, mit dem Geräte schnurlos verbunden werden können. Über die Funkeinrichtung mag ein Bedienterminal, beispielsweise ein Smartphone oder eine Computer, mit einem Feldgerät verbindbar sein.

Gemäß einem weiteren Aspekt der vorliegenden Erfindung wird ein Verfahren zum Verbinden eines Ausgangsanschlusses mit einem Eingangsanschluss beschrieben. Das Verfahren weist das kontrollierte Laden einer Energiespeichereinrichtung über eine Ladeeinrichtung auf, wobei die Ladeeinrichtung für ein kontrolliertes Laden der Energiespeichereinrichtung sorgen kann. Die Ladeeinrichtung ist eine Strombegrenzungseinrichtung und die Energiespeichereinrichtung ist ein Kondensator.

Strombegrenzung ist eine Einrichtung zum Begrenzen eines Stromes , der durch eine Leitung fließt, die mit der Strombegrenzung verbunden ist. Als kontrolliertes Laden einer Energiespeichereinrichtung mag beispielsweise verstanden werden, dass die Ladeeinrichtung dafür sorgt, dass ein Ladestrom der Energiespeichereinrichtung nicht über einen vorgebbaren Spitzenwert ansteigt. Die Ladeeinrichtung mag dafür sorgen, dass ein Strom, welcher über Zuleitungswiderstände von der Stromversorgung an die Verbindevorrichtung bereitgestellt wird, einen vorgebbaren Wert nicht überschreitet. Der Eingangsanschluss ist über die Ladeeinrichtung mit der Energiespeichereinrichtung verbunden. Das Verfahren weist das Erkennen eines vorgebbaren Ladezustands der Energiespeichereinrichtung auf und nachdem das Erreichen des vorgebbaren Ladezustandes erkannt wird, das Verbinden der Energiespeichereinrichtung mit dem Eingangsanschluss mittels eines Schalters . Zum Erkennen eines Ladezustands kann die Ladung der Energiespeichereinrichtung gemessen werden oder auch ein Zeitverhalten überwacht werden, beispielsweise mag der Ablauf eines Timers betrachtet werden. Ferner weist das Verfahren das Verbinden des Eingangsanschlusses mit dem Ausgangsanschluss während oder nach dem Verbinden der Energiespeichereinrichtung mit dem Eingangsanschluss mittels eines zweiten Schalters auf.

In einem Beispiel weist das Verfahren das Verbinden des Eingangsanschlusses mit dem Ausgangsanschluss während oder nach dem Erreichen des vorgebbaren Ladezustandes auf.

Die Verbindevorrichtung mag als ein Adapter oder eine Zwischenschaltvorrichtung ausgebildet sein, welche zwischen einer Stromversorgung und einem Feldgerät angeordnet werden kann. Die Verbindevorrichtung kann aber auch in einem Eingangsschaltkreis oder Eingangsstromkreis eines Feldgerätes integriert sein. Die Verbindevorrichtung mag in einem Beispiel als integrierter Schaltkreis und/oder aus diskreten Bauelementen realisiert sein. So kann die Verbindevorrichtung als Eingangsschaltkreis in einem Feldgerät vorgesehen sein. Als Verbindung mit einer Stromversorgung mag der Eingangsanschluss dienen. Für diese Verbindung kann die Verbindevorrichtung als Eingangsklemme einen standardisierten Stecker aufweisen, an dem die Stromversorgung angeschlossen werden kann. Als Verbindung mit Komponenten, welche von der Stromversorgung mit Strom, Spannung und/oder elektrischer Leistung versorgt werden sollen, kann der Eingangsanschluss und/oder der Ausgangsanschluss dienen. Der Eingangsanschluss mag zum Bereitstellen von geringen Strömen und/oder einer geringen Leistung ausgelegt sein. Beispielsweise mag der Eingangsanschluss entsprechend dünne Leitungen aufweisen. Zur Kontrolle der Strombegrenzung können Sicherungen oder Spulen vorgesehen sein. Der Ausgangsanschluss mag zum Versorgen von Komponenten ausgelegt sein, welche eine hohe Strom- und/oder Leistungsaufnahme aufweisen. Entsprechend kann der Ausgangsanschluss dicke Leitungen vorsehen.

Es mag als ein Aspekt der Erfindung angesehen werden, dass während eines Einschaltvorgangs, d. h. während dem Wechsel zwischen einem ausgeschalteten Zustand, in dem keine Versorgung mit Strom erfolgt, zu einem eingeschalteten Zustand, in dem eine Versorgung mit Strom erfolgt, dafür gesorgt wird, die Stromversorgung nicht unmittelbar nach dem Einschalten mit den "leistungshungrigen" Komponenten verbunden wird, also mit den Komponenten, die eine hohe Stromaufnahme haben. Insbesondere mag die Verbindevorrichtung so ausgelegt sein, dass Komponenten mit Strom versorgt werden können, obwohl Zuleitungswiderstände vorhanden sind, die für die Eigensicherheit sorgen. Diese Stromversorgung leistungshungriger Komponenten kann sichergestellt werden, indem eine Einrichtung zum Abfangen kurzfristiger Stromspitzen vorgesehen wird.

Zum Abfangen der kurzfristigen Stromspitzen mag die Energiespeichereinrichtung dienen, welche bei der Anforderung eines entsprechend hohen Stroms kurzzeitig diesen Strom zur Verfügung stellt, ohne diesen direkt von der Stromversorgung über die Widerstände anfordern zu müssen.

Gemäß einem Aspekt der vorliegenden Erfindung mag die Steuereinrichtung mit dem Eingangsanschluss verbunden sein.

Durch solch eine direkte Verbindung kann beispielsweise die Steuereinrichtung unmittelbar nach dem Anschließen der Verbindevorrichtung an eine Stromversorgung, beispielsweise durch einen Schalter, mit einer Versorgungsspannung versorgt werden und im Wesentlichen unmittelbar nach dem Einschalten oder nach dem Anschließen ihre Funktion aufnehmen. Entsprechend können auch weitere Komponenten mit einer geringen Stromaufnahme mit dem Eingangsanschluss verbunden sein. Beispielsweise mag ein Display und/oder ein Tastenfeld eine geringe Stromaufnahme aufweisen und direkt mit dem Eingangsanschluss verbunden sein. Durch das Verbinden mit dem Eingangsanschluss mag das Display im Wesentlichen unmittelbar nach dem Einschalten oder nach dem Anschließen an eine Stromversorgung die Betriebsbereitschaft anzeigen und das Tastenfeld kann für die Bedienbarkeit sorgen.

Die Strombegrenzungseinrichtung, Strombegrenzung oder der Laderegler kann dafür sorgen, dass ein elektrischer Strom, mit dem die Energiespeichereinrichtung geladen wird, einen gewissen Grenzstrom nicht überschreitet. Beispielsweise kann die Strombegrenzungseinrichtung dafür sorgen, dass ein mittlerer Strom durch die Ladeeinrichtung im Mittel während des gesamten Betriebs konstant bleibt, so dass Widerstände, welche in den Zugangsleitungen vorhanden sind, nicht über ihre Belastbarkeitsgrenzen hinaus belastet werden und die begrenzte Stromaufnahme hinsichtlich der Vorschriften und/oder Normen des Explosionsschutzes eingehalten werden können. Die Regel, die der Strombegrenzungseinrichtung zugrunde liegt und nach der die Begrenzung des Stromes durchgeführt wird, berechnet sich beispielsweise für den Fall, dass ein Kondensator als Energiespeichereinrichtung mit einem gegebenen maximalen Eingangsstrom genutzt wird, gemäß der Formel $t = C * \frac{U}{I}$. Wobei C die verbaute Kapazität des Kondensators darstellt, I den maximalen Eingangsstrom darstellt, der von der Strombegrenzungseinrichtung eingestellt wird, und U die angelegte Versorgungsspannung $V_{DD}$. Die Variable t mag die Zeitdauer beschreiben, die vergeht bis die Bedingung für das Verbinden des Eingangsanschlusses und des Ausgangsanschlusses erfüllt ist. Für einen Kondensator mit einer Kapazität von beispielsweise 470μF, bei einer Versorgungsspannung von 3,0V und einem Eingangsstrom von 700μA ergibt sich somit eine Ladedauer von 2,01s. Für die Bestimmung der Größe der Kapazität des Kondensators mag berücksichtigt werden, wie stark die Versorgungsspannung $V_{DD}$, und/oder $V_{BT}$ während eines Strompulses absinken darf. Der Kondensator mag so groß gewählt werden, dass bei maximaler Strompulslänge und Strompulshöhe nur geringe bis gar keine Schwankungen in der Versorgung auftreten. Diese Schwankungen berechnen sich aus dem auftretenden Strompuls $I_p$, dem Dauerstrom der Steuereinrichtung $I_d$, dem Eingangswiderstand R, insbesondere $R_{ein}$, in der Zuleitung und der Kapazität C der Energiespeichereinrichtung, sowie der Eingangsspannung $V_{ein}$ der Stromversorgung. Somit ergibt sich $V_{DD}$ nach der Formel

$V_{DD}$ = $V_{ein}$ - ($R * (I_d + I_p)$). Hierbei mag der Strompuls $I_p$ im Wesentlichen durch einen Verbraucher mit einer hohen Stromaufnahme gefordert werden, beispielsweise einem Bluetoothmodul. Der Strompuls $I_p$ mag im Wesentlichen in dem Ausgangsanschluss auftreten, wenn der Eingangsanschluss und der Ausgangsanschluss verbunden sind. $I_d$ und $I_p$ werden aufgrund der Knotenregel eines Stromkreises zusammen mit $I_c$, dem Strom, welcher durch den Kondensator geliefert wird, und dem Strom $I_e$ aufaddiert. $I_e$ ist der Strom-Anteil, der von Stromquelle verursacht wird. Beim Aufaddieren mag das Vorzeichen, das der Flussrichtung des zugehörigen Stromes entspricht, berücksichtigt werden. Es mag somit berücksichtigt werden, dass der Strom, der über die den Eingangsanschluss und den Ausgangsanschluss in die Schaltung, also in die jeweils angeschlossenen Module, hinein fließt, und der sich als Summe $I_d$+$I_p$ berechnet gleich der Summe des Stromes ist, der von der Quelle geliefert wird, nämlich $I_e$, und dem Strom, der von dem Kondensator geliefert wird, nämlich $I_c$. Damit ergibt sich die Gleichung $I_d + I_p = I_e + I_c$. Beim Einsetzen einer Differentialgleichung ergibt sich dann die Bestimmungsformel für die Versorgungsspannung $V_{DD}$ als

$$V_{DD} = V_{ein} - R * \left(I_d + I_p\right) + V_{ein} * e^{-\frac{t}{R*C}}.$$

In dieser Formel mag ein eventuell vorhandener Innenwiderstand des Kondensators vernachlässigbar sein und mag daher nicht berücksichtigt werden müssen, da dieser Innenwiderstand gegenüber dem Eingangswiderstand R sehr klein gewählt ist.

Der maximale Eingangsstrom $I_e$ mag entweder durch die Beschaltung vorgegeben sein, welche so gewählt ist, dass die Anforderungen des Explosionsschutzes erfüllt werden, oder er mag aufgrund anderer interner Beschaltungen der Quelle festgelegt werden. Beispielsweise mag die Quelle einen maximalen Eingangsstrom $I_e$ von 2mA liefern. Die Steuereinrichtung und weitere Komponenten mit niedriger Stromaufnahme, beispielsweise ein Display, ein Tastenfeld oder ein Datenspeicher, mögen jeweils einen Strom von 1,3mA benötigen. Somit kann der Strom $I_C$ für das Laden eines Energiespeichers auf 700μA ausgelegt werden.

Gemäß einem weiteren Aspekt der vorliegenden Erfindung ist die Steuereinrichtung zum Bestimmen des Ladezustands der Energiespeichereinrichtung mit einer Ladezustandsbestimmeinrichtung ausgestattet, beispielsweise einem Timer, einem Spannungsmesser und/oder einem Ladungsmesser.

Ein Timer kann beispielsweise dafür sorgen, dass ein Schaltsignal, welches für das Verbinden der Energiespeichereinrichtung mit dem Eingangsanschluss sorgt, nicht vor einem festlegbaren Zeitpunkt erzeugt wird, der so festgelegt ist, dass der Ladezustand der Energiespeichereinrichtung ausreichend ist, mögliche Stromspitzen auf den zu schützenden Zugangsleitungen mit den Widerständen zu vermeiden. Ein Timer kann in einem Beispiel derart ausgelegt werden, dass die verbaute Kapazität C der Energiespeichereinrichtung mit dem eingestellten Strom eine Ladezeit von t = 2s benötigt. Hierfür wird die Formel $t = C * \frac{U}{I}$ zur Berechnung der Ladezeit und damit zur Dimensionierung des Timers genutzt.

Weist die Steuereinrichtung, beispielsweise einen Mikrocontroller, eine Spannungsmesseinrichtung oder einen Spannungsmesser, wie beispielsweise einen A/D-Wandler (Analog/Digital-Wandler) auf, so ist es möglich, über die an der Energiespeichereinrichtung oder an dem Kondensator anliegende Spannung, den Ladezustand zu bestimmen, wenn die Kapazität des Kondensators bekannt ist. Bei einem ausreichenden Ladezustand kann die Steuereinrichtung dafür sorgen, dass die Energiespeichereinrichtung mit dem Eingangsanschluss verbunden wird und/oder dass der Eingangsanschluss mit dem Ausgangsanschluss verbunden wird, um Verbraucher zu aktivieren, die einen hohen Strom benötigen.

Da der Kondensator Stromspitzen abfängt, kann der Kondensator auch als Pufferkondensator bezeichnet werden. Der Kondensator ist dabei ausgelegt, innerhalb einer kurzen Zeit eine hohe Stromstärke liefern zu können und eine Nachfrage nach Strom in dem Ausgangsanschluss für eine vorgebbare Zeit zu befriedigen, ohne dass der Strom von einer externen Stromquelle, Spannungsquelle und/oder Leistungsquelle bereitgestellt werden muss. So kann eine vorübergehend angeforderte Stromspitze von der Verbindevorrichtung selbst zur Verfügung gestellt werden. Für die vorübergehende Stromversorgung liegt dann die Leistungsversorgung bezogen auf einen Widerstand in der Zugangsleitung auf der anderen Seite als die Stromquelle. Die Energiespeichereinrichtung übernimmt kurzfristig die Rolle der Stromversorgung.

Gemäß noch einem anderen Aspekt der vorliegenden Erfindung weist der Eingangsanschluss einen Widerstand zur Eigensicherheit auf.

Unter Eigensicherheit mag die Eigenschaft einer Schaltung bezeichnet werden, so ausgelegt oder dimensioniert zu sein, dass in sämtlichen Zuständen, die die Schaltung einnehmen kann, ein von einem Stromfluss verursachter Spannungsabfall einen vorgebbaren Grenzwert nicht überschreitet. Eine eigensichere Schaltung kann vermeiden, dass an irgendeiner Stelle der Schaltung Funken entstehen, welche zu Explosionen in mit Gasen belasteten Umgebungen führen können. Außerdem kann eine solche Schaltung eine unzulässige Erwärmung vermeiden, welche auch zu einer Zündung führen kann, beispielsweise zur Zündung eines Gasgemischs.

Gemäß einem weiteren Aspekt der vorliegenden Erfindung ist der Eingangsanschluss als eine Potentialschiene ausgebildet, um eine Einrichtung mit einem geringen Strombedarf anzuschließen, und/oder der Ausgangsanschluss ist als eine Potentialschiene ausgebildet, um eine Einrichtung mit einem hohen Stromverbrauch anzuschließen.

Um über die Potentialschiene eine Übertragung eines hohen Stromes zu gewährleisten, werden bei dem Ausgangsanschluss beispielsweise dickere Kabel- oder Leitungsquerschnitte verwendet, als bei dem Eingangsanschluss. An einer Potentialschiene kann ein Verbraucher oder eine Vielzahl von Verbrauchern angeschlossen werden. Im Falle der Potentialschiene für Einrichtungen mit einem hohen Stromverbrauch mag zu beachten sein, dass sich der Stromverbrauch der einzelnen Verbraucher zu einem großen Stromverbrauch summieren kann. In der dem Ausgangsanschluss zugeordneten Potentialschiene mag im Wesentlichen kurzfristig ein höherer Strom auftreten als in der dem Eingangsanschluss zugeordneten Potentialschiene.

Gemäß noch einem anderen Aspekt der vorliegenden Erfindung ist die Energiespeichereinrichtung so bemessen, dass für eine vorgebbare Zeit ein vorgebbarer Strom bereitgestellt werden kann.

Die Dimensionierung der Energiespeichereinrichtung kann sich dabei an dem Stromverbrauch und/oder dem Zeitverhalten eines oder einer Vielzahl an angeschlossenen Verbrauchern orientieren. Beispielsweise mag sich ein Funkmodul jeweils nur für eine kurze Zeit einschalten und innerhalb dieser kurzen Zeit zu einem Stromverbrauch führen, der sich als eine Stromspitze in dem Ausgangsanschluss niederschlagen mag.

Gemäß einem anderen Aspekt der vorliegenden Erfindung mag es sich bei einem Feldgerät, Messgerät oder Auswertegerät um ein Füllstandmessgerät, ein Durchflussmessgerät, ein Grenzstandmessgerät, ein Temperaturmessgerät, um ein Füllstandmessgerät basierend auf dem Aussenden von Radarstrahlen und um ein Feldgerät basierend auf dem Prinzip geführter Mikrowellen handeln.

Kurze Beschreibung der Figuren

Im Folgenden werden weitere exemplarische Ausführungsbeispiele der vorliegenden Erfindung mit Verweis auf die Figuren beschrieben.

Fig. 1 zeigt einen Blockschaltplan einer Verbindevorrichtung gemäß einem exemplarischen Ausführungsbeispiel der vorliegenden Erfindung.
Fig. 2 zeigt ein Blockschaltbild eines Ausschnitts des für die Stromversorgung zuständigen Teils der Fig. 1 gemäß einem exemplarischen Ausführungsbeispiel der vorliegenden Erfindung.
Fig. 3 zeigt einen Schaltplan eines Simulationsmodells für ein Gerät entsprechend einer Anordnung der Fig. 1 gemäß einem exemplarischen Ausführungsbeispiel der vorliegenden Erfindung.

Fig. 4 zeigt ein Diagramm eines Simulationsergebnisses einer mit der Schaltungsanordnung nach Fig. 3 durchgeführten Simulation gemäß einem exemplarischen Ausführungsbeispiel der vorliegenden Erfindung.

Fig. 5 zeigt einen Ausschnitt aus dem Diagramm der Fig. 4 während des Zuschaltens eines Verbrauchers mit hohem Strombedarf gemäß einem exemplarischen Ausführungsbeispiel der vorliegenden Erfindung.

Fig. 6 zeigt den Anschluss einer Anzeigeeinrichtung und einer Eingabeeinrichtung an eine Vielzahl von Feldgeräten gemäß einem exemplarischen Ausführungsbeispiel der vorliegenden Erfindung.

Fig.7 zeigt den Anschluss einer Anzeigeeinrichtung und einer Eingabeeinrichtung an eine Vielzahl von Feldgeräten mit einem Funkmodul gemäß einem exemplarischen Ausführungsbeispiel der vorliegenden Erfindung.

Fig. 8 zeigt ein Flussdiagramm für ein Verfahren zum Verbinden eines Ausgangsanschluss mit einem Eingangsanschluss gemäß einem exemplarischen Ausführungsbeispiel der vorliegenden Erfindung.

Detaillierte Beschreibung von Ausführungsbeispielen

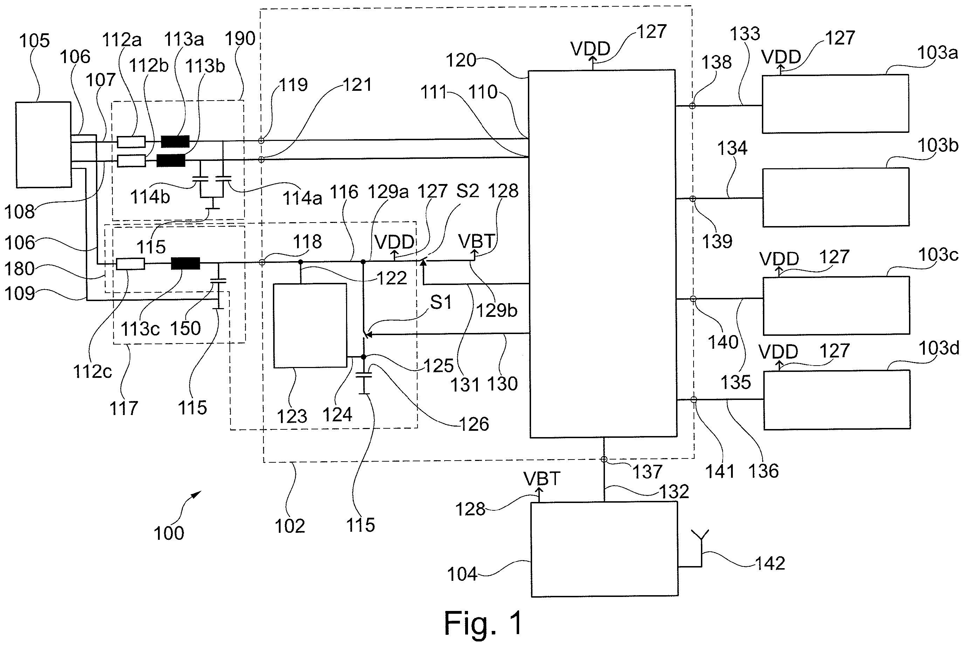

Die Darstellungen in den Figuren sind schematisch und nicht maßstäblich. In der folgenden Beschreibung der Fig. 1 bis Fig. 8 werden die gleichen Bezugszeichen für gleiche oder sich entsprechende Elemente verwendet.

Fig. 1 zeigt eine Schaltungsanordnung 100 aufweisend einen Eingangsstromkreis 117, die Verbindevorrichtung 102 und eine Vielzahl von Verbrauchern mit einem geringen Strombedarf 103a, 103b, 103c, 103d als auch einen Verbraucher mit einem hohen Strombedarf 104.

Eine Stromversorgung ist in Fig. 1 nicht dargestellt. Eine Stromversorgung kann dem Eingangsstromkreis 117 zugeordnet werden. Die Fig. 1 stellt jedoch die Kontaktfläche 105 mit vier Stromanschlüssen 106, 107, 108, 109 dar. An der Kontaktfläche 105, welche eine externe Verbindung, beispielsweise über Schleifkontakte ausbilden kann, kann eine Stromversorgung angeschlossen werden. Die Kontaktfläche kann als physikalischer I$^2$C Bus oder I2C Bus (Inter-Integrated Circuit) ausgebildet sein und über Schleifkontakte mit der Stromversorgung und/oder weiteren Datenleitungen verbunden werden, die beispielsweise in einem Deckel eines Feldgeräts untergebracht sein können. Dementsprechend sind in Fig. 1 die beiden Datenleitungen 107, 108 dargestellt. Die Datenleitungen 107 und 108 unterscheiden sich derart, dass eine Leitung 107, 108 als Clock-Leitung und die andere Leitung 107, 108 als Datenleitung ausgeprägt ist, wie dies beispielsweise die physikalische Realisierung des I2C-Bus vorsieht. In einem anderen Beispiel, wenn die Datenleitungen 107, 108 als Teil der UART Spezifikation realisiert sind, kann eine Leitung 107, 108 als Sendeleitung und die andere Leitung 107, 108 als Empfangsleitung ausgeprägt sein. Die Leitungen 107, 108 können in einem weiteren Beispiel auch zum Senden oder Empfangen von differentiellen Signalen ausgeprägt sein, wie dies bei einer RS485-Schnittstelle der Fall ist.

Die Datenleitungen 107, 108 werden über einen Ex- und EMV-Schutz (Explosionsschutz und elektromagnetische Verträglichkeit) 190 mit dem Dateneingang 110 der Steuereinrichtung 120, dem Mikrocontroller 120 oder der CPU (Central Processing Unit) 120 verbunden. Ebenso ist ein Anschluss der Kontaktfläche 105 über die Datenleitung 108 und den Ex- und EMV-Schutz der Datenleitung 190 mit dem Datenausgang 111 der Steuereinrichtung verbunden. Der Ex- und EMV-Schutz 190 für die Datenleitungen 107, 108 weist jeweils eine Spule 112a, 112b für die mit dem Dateneingang 110 und Datenausgang 111 verbundenen Anschlüsse und einen Eingangswiderstand 113a, 113b auf, sowie Kondensatoren 114a, 114b, die mit dem Massepotential 115 und der Dateneingangsleitung 107 bzw. Datenausgangsleitung 108 verbunden sind.

Ebenso sind die Stromversorgungsleitungen 106, 109 über einen Ex- und EMV-Schutz 117 der Versorgungsleitungen oder des Eingangsanschlusses mit dem Eingangsanschluss 116, 118 verbunden. Die Versorgungsleitungen 106, 109 führen in einem an eine Stromversorgung angeschlossenen Zustand einen Gleichstrom. Die Masseleitung 109 für die Stromversorgung ist mit dem Masseanschluss 115 verbunden. Außerdem ist die Versorgungsleitung 106 oder Phase 106 über eine Spule 112c und über einen Eingangswiderstand 113c mit dem Eingangsanschluss 116, 118 verbunden. Der Ausgang des Widerstandes 113c ist mittels eines Kondensators 150 von dem Massepotential 115 getrennt. Es ist der Fig. 1 zu entnehmen, dass der Eingangsanschluss 116 als eine Eingangsleitung ausgebildet sein kann. Zur Kopplung mit dem Ex- und EMV-Schutz 190 für die Datenleitungen 107, 108 und den Ex- und EMV-Schutz 117 für die Stromversorgungsleitungen 106, 109 kann der Eingangsanschluss 116 einen Steckkontakt 118 aufweisen. Ebenso kann der Dateneingang 110 bzw. der Datenausgang 111 über Steckkontakte 119 und 121 und zugehörige Datenleitungen ausgebildet sein, um eine lösbare Verbindung mit dem Ex- und EMV-Schutz 190 zur Verfügung zu stellen.

Der Eingangsanschluss 116 ist über die Stichleitung 122 mit der Ladeeinrichtung 123 verbunden, welche wiederum über eine Leitung 124 an dem Knotenpunkt 125 mit der Energiespeichereinrichtung 126 verbunden ist. Ein anderer Anschluss der Energiespeichereinrichtung 126 ist mit der Masseleitung 115 verbunden. Bei der Energiespeichereinrichtung 126 kann es sich um eine Kapazität 126 oder um einen Kondensator 126 handeln. Die Kapazität C des Kondensators 126 kann einen Wert zwischen 400 $\mu$F bis 1000 $\mu$F aufweisen. Die Energiespeichereinrichtung 126 trennt den Knotenpunkt 125 von dem Massepotential 115. Der Knotenpunkt 125 stellt die Stelle im System dar, welche bei Anlegen einer Versorgungsspannung $V_{ein}$ einen linearen Anstieg der Kondensatorspannung aufweist und nach dem Ladevorgang mittels S1 auf die Spannung $V_{DD}$, welche an der Leitung 129a anliegt, zugeschaltet wird. Der Strom $I_C$

zum Laden des Kondensators wird von der Leitung 124 aus der Ladeeinrichtung 123 geliefert.

An dem Knotenpunkt 125 ist auch der Schalter S1 angeordnet, über den der Knoten 125, insbesondere der Kondensator 126 und/oder die Strombegrenzung 123, mit dem Eingangsanschluss 116 verbunden sind. Der Eingangsanschluss 116 weist die Stromschiene 127 auf, welche in einem eingeschalteten Zustand ein Versorgungspotential $V_{DD}$ trägt. Bei diesem Versorgungspotential $V_{DD}$ handelt es sich um ein Signal, das nur gering belastet werden kann und von einer Stromversorgung bereitgestellt wird. Bei dem Versorgungspotential $V_{DD}$ handelt es sich insbesondere um ein Versorgungssignal für Verbraucher mit einem geringen Strombedarf. Stromverbrauchswerte von typischen Bauelementen für ein Feldgerät wie einem Mikrocontroller oder einem Display, liegen im Bereich von 0,1mA bis 1,5mA. Die letztendlichen Stromverbrauchswerte sind von verschiedenen Faktoren abhängig, wie die verschiedenen Standby-Modi, in denen die Bauteile betrieben werden. Es ist auch nicht exakt vorhersehbar, zu welchen Zeitpunkten welches Bauteil aktiv ist. So kann bei einer Dimensionierung der Energiespeichereinrichtung 126 nur mit Schätzwerten gearbeitet werden, beispielsweis mit Mittelwerten für das An-/Ausverhalten. Der Versorgungsanschluss 116 und/oder die Stromschiene 127 ist mit einem entsprechenden Versorgungsanschluss 127 der Steuereinrichtung 120, der CPU 120 oder dem Mikroprozessor 120 verbunden. Über diesen Versorgungsanschluss 127 kann eine Versorgungsspannung $V_{DD}$ mit einem entsprechenden Versorgungsstrom an den Mikroprozessor 120 bereitgestellt werden, um den Betrieb der CPU 120 sicherzustellen. Die Schwachstrompotentialschiene 127 kann auch mit einer Anzeigeeinrichtung 103a oder einem Display 103a, mit einer Speichereinrichtung 103c oder einem EEPROM oder Flashspeicher 103c und/oder mit einer Strombegrenzung 103d mit LED für eine Rückbeleuchtung eines Displays verbunden sein. Tastenfelder103b müssen nicht zwingend mit $V_{DD}$ verbunden werden, wenn die Tasten mit im Mikrocontroller 120 integrierten Pull-Up-Widerständen verbunden sind und bei Tastendruck ein "LOW"-Signal an den Mikrocontroller 120 abgeben. In einem anderen Beispiel könnte das Tastenfeld beispielsweise mit kapazitiven Sensoren ausgeführt sein, um eine Touch-Bedienung zu ermöglichen, was eine Verbindung mit $V_{DD}$ zur Versorgung nötig machen könnte.

Die Verbindevorrichtung 102 weist einen zweiten Schalter S2 auf. Dieser zweite Schalter S2 ist zwischen der Potentialschiene 127 für Verbraucher mit geringem Strombedarf und der Potentialschiene 128 für Verbraucher mit einem hohen Strombedarf angeordnet. Der Schalter S2 trennt somit die beiden Potentialschienen 127 und 128. Insbesondere trennt der Schalter S2 den Eingangsanschluss 116 und den Ausgangsanschluss 129b, wobei der Ausgangsanschluss 129b die Potentialschiene 128 für Geräte mit hohem Strombedarf aufweisen kann. Im Falle, dass S2 geöffnet ist, stellt der, der Stromschiene 127 zugewandte Teil 129a des Eingangsanschlusses 116, einen Ausgangsanschluss dar.

Der Schalter S1 wird über ein erstes Steuersignal angesteuert, welches über die Steuerleitung 130 von der Steuereinrichtung 120 bereitgestellt werden kann. Der Schalter S2 wird von einem zweiten Steuersignal angesteuert, welches über die zweite Steuerleitung 131 von der Steuereinrichtung 120 bereitgestellt werden kann. Der Schalter S1 kann bei seiner Betätigung, d.h. für den in Fig. 1 dargestellten Fall bei seinem Schließen, die Energiespeichereinrichtung 126 mit dem Eingangsanschluss 116 verbinden.

Der Schalter S2 kann den Eingangsanschluss 116 mit dem Ausgangsanschluss 129b verbinden, wodurch die Stromschienen 127 und 128 zu einer gemeinsamen Stromschiene, insbesondere zu einem gemeinsamen Ausgangsanschluss 129a, 129b, verbunden werden. Das bedeutet, dass wenn der Schalter S2 betätigt wird und wenn der Eingangsanschluss 116 und der Ausgangsanschluss 129b verbunden sind, die Potentialschiene 127 und die Potentialschiene 128 auf demselben Potential liegen. In diesem Fall gilt, dass die Spannung $V_{DD}$ an der Stromschiene 127 der Spannung $V_{BT}$ an der Stromschiene 128 entspricht. Im Falle eines offenen Schalters S2 liegt lediglich an der Potentialschiene 127 und an dem Ausgangsanschluss 129a ein Potential $V_{DD}$ an, um die Geräte oder Module zu versorgen, die einen geringen Strombedarf haben. Das Potential an der zweiten Potentialschiene 128, insbesondere an dem Ausgangsanschluss 129b, beträgt in diesem Fall 0V.

Über die Potentialschiene 128 für Geräte mit hohem Strombedarf ist das Funkmodul 104, insbesondere das Bluetoothmodul 104 angeschlossen. Das Funkmodul 104 ist über die Daten- und Steuerleitung 132 mit der Steuereinrichtung 120 verbunden. Die Steuereinrichtung 120 kann über die Steuerleitung 132 eine Modemfunktionalität UART (Universal Asynchronous Receiver Transmitter) zum Datenaustausch und eine Funktionalität zur Flusssteuerung (Flowcontrol) bereitstellen. Des Weiteren können weitere Signalleitungen in der Leitung 132 vorhanden sein, denn es mag beispielsweise die Notwendigkeit bestehen, dass Informationen über einen Verbindungsstatus oder eine Empfangsfeldstärke (RSSI, Received Signal Strength Identification) des Funkmoduls 104 an den Mikrocontroller 120 übertragen werden sollen. Die Steuerleitung 132 kann als paralleler Bus ausgebildet sein, über den Daten von und zu, also in bidirektionaler Richtung, zwischen dem Funkmodul 104 und der Steuereinrichtung 120 ausgetauscht werden. Alternativ kann die Leitung 132 als UART ausgeführt sein.

Über die Verbindungsleitung 133 ist die Anzeigeeinrichtung 103a mit der Steuereinrichtung 120 verbunden und kann Daten und Steuersignale über die Leitung 133 austauschen. Über die Verbindungsleitung 134 ist das Tastenfeld 103b mit der Steuereinrichtung 120 verbunden. Über die Verbindungsleitung 134 wird viermal GPIO (General Purpose Input Output) angeboten. Bei Mikrocontrollern wird ein Pin als GPIO bezeichnet, wenn dieser funktional zwischen digitalem Eingang (Digital Input), digitalem Ausgang (Digital Output) oder anderen Funktionen, z.B. einem analogen Eingang (Analog Input) umgeschaltet werden kann. Jede Taste einer Tastatur 103b ist mit einem Digital Input des Mikrocontrollers 120 verbunden, d.h. mit einem digitalen Eingang. Bei Betätigung der Tasten wird die jeweilige zugeordnete Leitung auf "LOW geschaltet, d.h, der Digital Input wird auf das Potential GND geschaltet, indem er mit Anschluss 115 verbunden wird. Im Ruhezustand wird die Leitung über Pull-Up-Widerstände auf "HIGH" gehalten. Diese Pull-Up-Widerstände könnten auch bei 103b angeordnet sein und eine Masseleitung GND 115 bereitstellen.

Über die Speicheranschlussleitung 135 ist die Speichereinrichtung 103c, beispielsweise ein Datenspeicher, mit der Steuereinrichtung 120 verbunden. Die Speicheranschlussleitung kann als I$^2$C Leitung oder SPI (Serial Peripheral Interface) Leitung ausgebildet sein. Über die Strombegrenzungsleitung 136 ist die Strombegrenzung 103d mit LED für die Anzeigenbeleuchtung mit der Steuereinrichtung 120 verbunden. Die Strombegrenzung 103d dient dazu nur eine bestimmte Menge Strom für die LED zur Verfügung zu stellen. Würde man diese Strombegrenzung nicht einsetzen, würde beim Betrieb der LED unter Umständen zu viel Strom in die LED getrieben werden und diese könnte zerstört werden oder die Versorgungsspannung $V_{DD}$ zu stark belasten. Des Weiteren wird in Normen für die Eigensicherheit eine maximale Menge an elektrischer Energie für optische Strahler vorgeschrieben. Dieser maximale Wert liegt im Bereich von 15mW. Die Strombegrenzung 103d könnte auch als intelligenter Stromtreiber ausgeführt sein, welcher auch einstellbar sein könnte um die Helligkeit zu steuern

Die Steuerleitungen 132, 133, 134, 135, 136 sind mittels entsprechender Anschlüsse an der Verbindevorrichtung 102 angeschlossen. Die Anschlüsse tragen die Bezugszeichen 137, 138, 139, 140. Das Vorsehen der Verbindevorrichtung 102 zwischen den Ex- und EMV-Schutzeinrichtungen 190, 117 und den Verbrauchern 103a, 103b, 103c, 103d, 104 kann für eine Separierung der Verbraucher in Verbraucher mit geringem Strombedarf 103a, 103b, 103c, 103d und Verbraucher mit hohem Strombedarf 104 genutzt werden. Die Separierung erfolgt dabei durch den Anschluss an die jeweilige Stromschiene 127, 128. Die Separierung kann somit örtlich sein. Das Funkmodul 104 mit der Antenne 142 benötigt für einen fehlerfreien Betrieb einen großen Strom, insbesondere eine hohe Leistung. Der Strom bzw. die Leistung mag kurzfristig bereitgestellt werden, wodurch sich ein hoher Stromimpuls ergeben mag. Werte für Displays 103a können im Bereich von 100 μA bis 500μA liegen, wenn es sich um graphische Displays handelt, insbesondere um 2-farbige oder schwarz-weiße Displays. Ein typischer Verbrauchswert für einen Mirkocontroller liegt beispielsweise in der Leistungsklasse Cortex M0+-Kern mit 196kB Flash-Memory und im aktiven Modus bei etwa 0,5 mA bis 1,5mA und im Standby bei weniger als 100μA. Ein Datenspeicher EEPROM 103c kann im Standby, d.h. ohne Lese- und Schreibzugriff, bei etwa 1 μA bis 1,5μA liegen und bei Lese- oder Schreibzugriff im Bereich von 2 mA bis 5mA.

Ein Bluetoothmodul 104 kann deutlich höhere Stromverbrauchswerte aufweisen. So kann es bei Funkaktivität Spikes mit etwa 15mA für 1 bis 3ms generieren. Danach geht es in den Standby-Modus, wobei der Standby-Strom bei etwa 1 μA bis 40μA liegt. Eine Designregel kann beispielsweise vorsehen, dass jeweils nur ein einziges Modul von jedem Typ 103a, 103b, 103c, 103d vorgesehen ist und von dem Funkmodul 104 jeweils nur eine Instanz verwendet wird. In einem Beispiel wird die Spannung $V_{DD}$ überwacht, beispielsweise mittels Analog-Digital-Wandlung oder mittels eines Komparators, welcher eine analoge Schwelle überwacht, und bei einem entsprechenden Erkennen einer zu niedrigen Versorgungsspannung einige Komponenten 103a, 103b, 103c, 103d abschaltet. Das Erkennen und Abschalten kann von der Steuereinrichtung 120 durchgeführt werden.

Mittels der Verbindevorrichtung 102 kann folglich eine Energieverteilung gesteuert werden und ein Energieversorgungskonzept für eine Schaltung 100, beispielsweise eine Stromversorgungsschaltung, für ein Feldgerät aufgebaut werden. Die Verbindevorrichtung 102 kommt mit einem geringen Bauteilaufwand aus, weist im Wesentlichen kein schaltendes Element auf, was zu einer hohen EMV-Sicherheit führen kann. Als schaltende Komponenten werden DC-DC-Wandler (Gleichstrom-/Gleichstrom-Wandler) bezeichnet, welche eine Spannungskonvertierung durchführen indem sie getaktet betrieben werden. Die Verbindevorrichtung 102 weist eine sehr gute Effizienz auf. Die Effizienz der Schaltung ergibt sich aus dem Verhältnis der abgegeben Leistung zur zugeführten Leistung. Da DC-DC-Wandler einen Wirkungsgrad von weniger als 100% haben, wird in einer solchen Schaltung immer Energie verschwendet. Durch das einmalige kontrollierte Aufladen des Kondensators und das anschließende einfache Aufschalten auf die Leitung 127 entsteht nach dem Aufladen im Wesentlichen kein weiterer Energieverlust durch schaltende Bauteile. Die Strombegrenzung 123 kann ebenfalls abgeschaltet werden, sodass hier keine Leckströme oder andere Ströme zu einem Verbrauch führen. Somit ist der einzige Energieverlust noch in den Widerständen 113a, 113b, 113c vorhanden, welche für die Eigensicherheit verantwortlich sind.

Da die Verbindevorrichtung keinen getakteten Schaltregler verwendet, können die Verluste vermieden werden. Die Verbindevorrichtung 102 kann jedoch auf das Startverhalten eines Gerätes, insbesondere eines Feldgerätes oder Auswertegerätes, Rücksicht nehmen, ohne dabei für einen Benutzer zu einem ungewöhnlichen Startverhalten zu führen. In anderen Worten mag mithilfe der Verbindevorrichtung 102 das Einschaltverhalten trotz verwendeter Ex- und EMV-Schutzmaßnahmen mittels Widerständen 113a, 113b, 113c, so steuerbar sein, dass die im Startzeitpunkt benötigten Verbraucher einsetzbar sind. Lediglich Verbraucher mit einem hohen Strombedarf bleiben während des Startvorgangs noch abgeschaltet. Durch diese Maßnahmen kann eine eigensichere Versorgung genutzt werden, um elektronische Komponenten 104 mit einem hohen Leistungsbedarf zu versorgen, obwohl die Stromversorgung zur Sicherstellung der Eigensicherheit nur eine geringe Leistung zur Verfügung stellen kann. Mittels der Verbindevorrichtung 102 kann die Stromaufnahme in der Startphase effizient verteilt werden und auch ein effizienter Betrieb von eigensicher versorgten Geräten sichergestellt werden, indem die Ladung der Energiespeichereinrichtung 126 gesteuert und/oder geregelt wird und entsprechend Verbraucher zu- und abgeschaltet werden. Das Abschalten von verschiedenen Verbrauchern kann genutzt werden um ggf. eine zu hohe Stromaufnahme zu vermeiden. Die Erkennung einer solchen Situation kann wie oben beschrieben erfolgen.

Zum Überwachen eines Ladezustands der Energiespeichereinrichtung 126 weist die Steuereinrichtung 120 beispielsweise einen Timer auf. Alternativ oder in Ergänzung zu einem Timer kann die Steuereinrichtung 120 einen Spannungs- oder Ladungsmesser aufweisen, der die Energiespeichereinrichtung 126 mit einem Messeingang der Steuereinrichtung 120 verbindet (ein Timer und/oder ein Spannungsmesser sind in Fig. 1 nicht dargestellt, da er/sie in der Steuereinrichtung 120 integriert ist/sind). Durch eine solche Überwachungseinrichtung, beispielsweise durch den Timer oder durch eine Spannungsmesseinrichtung, kann das Schalten der Schalter S1 und/oder S2 gesteuert werden, so dass die Schalter S1, S2 in geeigneten Momenten betätigt werden, d.h. geschlossen werden.

Die Kontaktfläche 105 und die Eingangswiderstände 113a, 113b, 113c können einer in Fig. 1 nicht dargestellten Stromversorgung und/oder Spannungsversorgung zugeordnet werden. Die Widerstände 113a, 113b, 113c stellen im Wesentlichen die Eigensicherheit, d. h. den Ex- und EMV-Schutz sicher. Insbesondere stellen die Widerstände 113a, 113b, 113c im Wesentlichen den Ex-Schutz her, während die Induktivitäten 112a, 112b, 112c und die Kondensatoren 114a, 114b, 150 im Wesentlichen den EMV-Schutz herstellen. Ausgehend von der Kontaktfläche 105 hinter den Widerständen 113a, 113b, 113c wird die Verbindevorrichtung 102 zwischen den Schutzeinrichtungen 190, 117 und den Verbrauchern 103a, 103b, 103c, 103d, 104 angeordnet. Somit wird der Energiespeicher 126 hinter die Widerstände 113a, 113b, 113c geschaltet. Diese Energiespeichereinrichtung 126 wird jedoch nicht direkt über den Widerstand 113c der Stromversorgungsschutzeinrichtung 117 geladen, sondern über eine Ladeeinrichtung 123 oder Strombegrenzung 123. Parallel zu der Strombegrenzung 123 ist die Versorgungsleitung 116, 129b angeordnet, welche die beiden Potentialschienen 127, 128 aufweist. Die Potentialschienen 127, 128 führen zu den einzelnen Modulen der Elektronik 100 des jeweils betrachteten Geräts.

Durch die Anordnung des Schalters S2 wird sichergestellt, dass beim Anlegen einer Spannungsversorgung, einer Stromversorgung und/oder einer Leistungsversorgung an den Eingangsanschluss 116 zumindest die Steuereinrichtung 120 mit der Versorgungsspannung verbunden ist, die von der Leistungsversorgung bereitgestellt wird. Das mag bedeuten, dass der Versorgungsanschluss 127 und der Ausgangsanschluss 129a der Steuereinrichtung 120 fest mit der Potentialschiene 127 des Eingangsanschlusses 116 verbunden sind. Wird eine Versorgungspannung an die Kontaktfläche 105 und somit auch zumindest an den Eingangsanschluss 116 angelegt, erreicht die Potentialschiene 127 schnell den gewünschten Sollwert für die Spannung in Höhe der Versorgungsspannung $V_{DD}$. Durch das schnelle Anliegen der Versorgungsspannung $V_{DD}$ an zumindest der Steuereinrichtung 120, kann die Steuereinrichtung 120 ihre Arbeit aufnehmen, bevor andere Module versorgt sind.

Parallel zu dem Versorgen der Steuereinrichtung 120 kann über einen längeren Zeitraum die Energiespeichereinrichtung 126 aufgeladen werden. Auch für dieses Laden wird die Spannung in der Höhe $V_{DD}$ genutzt. Da keine spannungserhöhenden Bauteile vorhanden sind, ist $V_{DD}$ die einzige verfügbare Spannung, die für das Laden verwendet werden kann. Beispielsweise mag die Speichereinrichtung 126 so dimensioniert sein, dass die vorgebbare Ladung in einem Zeitraum von fünf Sekunden (5s) erreicht wird. Das Erreichen der gewünschten Ladung kann beispielsweise über einen Timer, der auf fünf Sekunden eingestellt ist, überwacht werden oder über das Kontrollieren einer anliegenden Spannung an der Energiespeichereinrichtung 126.

Nachdem die Energiespeichereinrichtung 126 den gewünschten Ladungswert erreicht hat und aufgeladen ist, wird über den ersten Schalter S1, der von der Steuereinrichtung 120 angesteuert wird, der Energiespeicher 126 zu der Versorgungsleitung 116, 127, 129a hinzugeschaltet. In anderen Worten wird die Energiespeichereinrichtung 126 mittels Schalter S1 zu dem Eingangsanschluss 116 hinzugeschaltet, insbesondere zu der Potentialschiene 127 für Verbraucher mit einem geringen Strombedarf. Durch dieses Hinzuschalten ist die Versorgungsleitung, der Eingangsanschluss 116 und insbesondere die Potentialschiene 127 mit einer hohen Kapazität 126 gepuffert. D.h. Stromschwankungen können durch die in der Speichereinrichtung 126 gespeicherte hohe Ladung ausgeglichen werden.

Durch die hinzugeschaltete Energiespeichereinrichtung 126 können damit Einbrüche an der Versorgungsspannung $V_{DD}$ gut ausgeglichen werden. Einbrüche an der Versorgungsspannung können beispielsweise durch Strompulse hervorgerufen werden, die während des Betriebs auftreten, beispielsweise weil ein versorgtes Gerät einen momentan hohen Strombedarf hat. Durch das Ausgleichen der Einbrüche der Versorgungsspannung fallen die Einbrüche an der Versorgung über die Betriebsdauer gering aus. Somit kann eine im Wesentlichen konstante Stromversorgung und/oder Spannungsversorgung der Module sichergestellt werden.

Da die Energiespeichereinrichtung 126 von einer Stromversorgung aus gesehen hinter den Leitungswiderständen 113c liegt, werden die Leitungswiderstände 113c wegen des Ausgleichs eines Einbruchs der Versorgungsspannung über die Energiespeichereinrichtung 126 im Wesentlichen nicht betroffen. Dadurch ist auch der gesamte Energieverlust in der Schaltung gering, da keine Energie durch einen zu hohen Strom in dem Eingangswiderstand 113c verloren geht.

Durch die Größe der Kapazität der Energiespeichereinrichtung 126 kann die Pufferleistung an die jeweilige Anwendung angepasst werden, d. h. an die jeweils vorhandenen zu versorgenden Module. Das Vorsehen der Verbindevorrichtung 120 kann auch dazu führen, dass die Startzeit und damit die Zeit bis zu einer vollen Betriebsbereitschaft des gesamten Geräts 100 steigt. In anderen Worten kann zwar die Grundfunktionalität, wie ein Display oder eine Tastatur, schnell bereitstehen. Bis zur vollen Betriebsbereitschaft, z.B. mit Funkeinrichtung 104, mag jedoch eine längere Zeit vergehen, die davon abhängt, wie groß die Energiespeichereinrichtung sein muss. Durch die direkte Versorgung der Steuereinrichtung 120 über den Eingangsanschluss 116 und die Potentialschiene 127 kann die Steuereinrichtung 120 direkt aus dem Versorgungszweig für Verbraucher mit geringem Strombedarf 127 versorgt werden. Wenn der Ausgangsanschluss 129b nicht zugeschaltet ist, bildet die Potentialschiene 127 insbesondere ein Teil 129a des Eingangsanschlusses den Ausgangsanschluss. Es muss folglich nicht gewartet werden, bis die Pufferwirkung der Energiespeichereinrichtung 126 erreicht ist, wenn die Steuereinrichtung ihren Betrieb aufnimmt und nur leistungsschwache Grundfunktionen bereitgestellt werden. Lediglich der Ausgangsanschluss 129b für Geräte mit hoher Leistungsanforderung wird später zugeschaltet, wodurch der Ausgangsanschluss 129a, 129b verlängert wird. Somit kann eine sofortige Versorgung der Grundfunktionalität der Schaltung, d. h. zumindest der Betrieb der Steuereinrichtung 120, gewährleistet werden.

Werden auch Anzeigeeinrichtungen 103a oder Eingabeeinrichtungen 103b direkt mit dem Eingangsanschluss 116 und insbesondere mit der Potentialschiene 127 verbunden, so werden sie auch sofort beim Einschalten mit der ungepufferten Versorgungsspannung $V_{DD}$ versorgt. Somit kann ein sofortiges Signalisieren des Einschaltzustandes an einen Anwender ermöglicht werden. Für einen Anwender erscheint damit das Gerät 100 oberflächlich als sofort betriebsbereit, auch wenn Module mit einem hohen Strombedarf, wie das Funkmodul 104, noch nicht eingeschaltet sind, sondern abwarten bis eine ausreichende Pufferwirkung der Energiespeichereinrichtung 126 zur Verfügung steht. Durch das sofortige Bereitstellen der Versorgungsspannung über die Potentialschiene 127 kann jedoch eine Anzeigeeinrichtung 103a oder ein Display 103a sofort eingeschaltet werden und das Gerät 100 über Tasten bedient werden. Die in Fig. 1 dargestellten Tasten 103b benötigen keine eigene Stromversorgung. Lediglich Pull-Up-Widerstände werden ggf. benötigt. Alternativ könnte hier auch ein kapazitives Verfahren eingesetzt werden um eine Touch-Bedienung zu ermöglichen.

Die integrierte Funkeinheit 104 oder Funkeinrichtung 104 bleibt jedoch so lange ausgeschaltet, bis die Energiespeichereinrichtung 126 die erforderliche Pufferwirkung aufgebaut hat. Bei der Funkeinrichtung 104 mag es sich um ein elektronisches Modul mit einer großen Spitzenstromaufnahme handeln.

Die Steuereinrichtung 120 wird so eingerichtet, dass sie eine geringe Stromaufnahme aufweist und die Versorgungsspannung $V_{DD}$ im ungepufferten Zustand nicht oder nur gering belastet. Die Stromaufnahme eines Mikrocontrollers 120 kann über mehrere Maßnahmen beeinflusst werden. Beispielsweise kann die CPU 120 in den Standby-Zustand versetzt werden oder die Taktfrequenz kann verändert werden, wobei ein höherer Takt einem höheren Strom entspricht. Ein geringerer Stromverbrauch kann auf Kosten einer langsameren Abarbeitung erreicht werden. Es können aber auch einzelne Hardware-Komponenten aktiviert oder deaktiviert werden, beispielsweise über die UART-Schnittstelle, die SPI- oder I2C-Schnittstelle oder über Komparatoren. Als weitere Maßnahme zur Beeinflussung der Stromaufnahme können die integrierten Schnittstellen des Mikrocontrollers abgeschaltet werden. Ein Abschalten kann nötig sein, da diese Schnittstellen mit einem Takt betrieben werden und dadurch auch einen Strom verbrauchen, selbst wenn keine Datenkommunikation aktuell stattfindet.

Wegen der geringen Stromaufnahme der Steuereinrichtung 120 kann der gesamte Strombedarf für das Gerät 100 in der Startphase, d. h. zu der Zeit, in der die Energiespeichereinrichtung 126 noch nicht betriebsbereit ist, unter einem gewissen Grenzwert gehalten werden. Selbst bei Belastung der Stromversorgung gleichzeitig durch die Steuereinrichtung 120 und den Ladestrom der Energiespeichereinrichtung 126 kann der sich ergebende Strom über Widerstand 113c unter einem Grenzwert gehalten werden, obwohl der große Energiespeicher bereits geladen wird. Die Steuereinrichtung 120 ist so eingerichtet, dass sie Stromverbraucher mit einer hohen Stromaufnahme, beispielsweise das Funkmodul 104, erst nach dem Aufladen der Energiespeichereinrichtung 126 einschaltet. Das Einschalten der Verbraucher mag durch das Anlegen einer entsprechenden Spannung erfolgen.

Mittels der Verbindevorrichtung 102 kann eine Strombegrenzungseinrichtung, welche dauerhaft in einem Versorgungszweig verbleibt, beispielsweise in dem Eingangsanschluss 116 oder in der Potentialschienen 127, 128, ersetzt werden. Somit kann vermieden werden, dass eine Strombegrenzungseinrichtung eingesetzt werden muss, die bei sehr schnellen Anstiegszeiten von Stromspitzen mittels einer Regelung entsprechend der Anstiegszeit sehr schnell reagieren muss. Bauteile mit einer entsprechend schnellen Regelung, um auf schnelle Anstiegszeiten von Stromspitzen zu reagieren, hätten selbst eine hohe Stromaufnahme und würden bei der Dauerbelassung in dem Eingangsanschluss 116 oder Ausgangsanschluss 126 während des Betriebs zu hohen Verlusten führen. Mittels der Verbindevorrichtung 102 kann die Strombegrenzungseinrichtung 123 lediglich temporär eingesetzt werden, wodurch ein guter Wirkungsgrad einer Schaltung 100 erreicht werden kann.

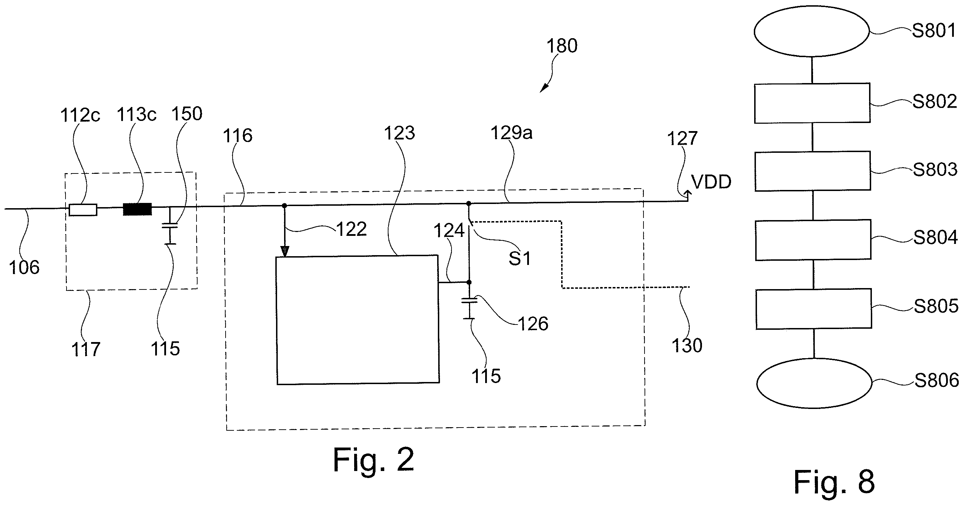

Fig. 2 zeigt einen Ausschnitt 180 des für die Stromversorgung zuständigen Teils der Schaltung 100, insbesondere des Geräts 100 der Fig. 1. Dieser Schaltungsausschnitt weist die Versorgungsleitung 106 auf sowie die Ex- und EMV-Schutzeinrichtung 117 mit der Spule 112c und dem Widerstand 113c. In Fig. 2 ist der Zustand dargestellt, in dem die Energiespeichereinrichtung 126 noch nicht dem Eingangsanschluss 116 zugeschaltet ist, so dass der Eingangsanschluss 116 lediglich mit der Potentialschiene 127, insbesondere mit dem Ausgangsanschluss 129a, verbunden ist und folglich die Potentialschiene 127 das Versorgungspotential $V_{DD}$ einer nicht dargestellten Leistungsversorgung trägt. Da der Eingangsanschluss 116 und die Potentialschiene 127 verbunden sind, können beide als Versorgungszweig oder Versorgungsleitung aufgefasst werden. Über die Steuerleitung 130 wird Schalter S1 mit dem Steuersignal von der Steuereinrichtung (nicht in Fig. 2 dargestellt) angesteuert.

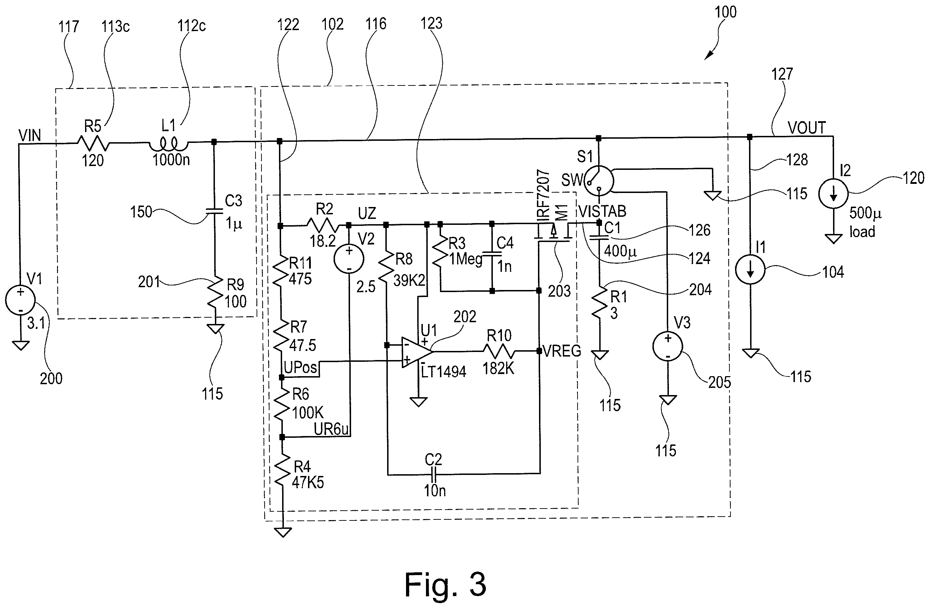

Fig. 3 zeigt einen Schaltplan eines Simulationsmodells für ein Gerät 100 entsprechend einer Anordnung der Fig. 1, gemäß einem exemplarischen Ausführungsbeispiel der vorliegenden Erfindung. In diesem Schaltplan ist die Leistungsversorgung 200, die Stromversorgung 200 oder die Spannungsversorgung 200, V1 als eine Spannungsversorgung mit V1 = 3,1 Volt ausgeführt. Diese Spannung V1 wird als $V_{IN}$ an den Vorwiderstand 113c weitergegeben. Der Vorwiderstand 113c, R5 ist für die Eigensicherheit des Schaltkreises vorgesehen, beispielsweise für den Schaltkreis 100 eines Feldgeräts. An dem Vorwiderstand 113c liegt die Spannung $V_{IN}$ an. An dem Vorwiderstand 113c, R5 schließt sich eine Spule 112c, L1 an. Der Widerstand R5 ist mit 120 Ohm ausgebildet, die Spule L1 weist 1000 nH auf. Die Spule ist eine EMV Filterinduktivität 112 und ist mit der EMV Filterkapazität 150, C3 in Höhe von 1 μF und einem Widerstand 201, R9 mit dem Masseanschluss 115 verbunden. Der Eingangsanschluss 116 der Verbindevorrichtung 102 ist mit der EMV Filterinduktivität 112c und der EMV Filterkapazität 150 verbunden. An dem Eingangsanschluss 116 ist auch die Ladeeinrichtung 123 oder die Strombegrenzung 123 angeschlossen, die im Wesentlichen einen Operationsverstärker 202, U1 und einen von diesem Operationsverstärker gesteuerten Transistor 203, M1 aufweist, der als Stellglied für die Strombegrenzung ausgeführt ist.

Am Ausgang 124 der Strombegrenzungseinrichtung 123 ist über die Ausgangsleitung 124 die Energiespeichereinrichtung 126 angeschlossen, die über den geregelten Strom geladen wird, welcher über die Ausgangsleitung 124 zur Verfügung gestellt wird. Die Energiespeichereinrichtung 126, C1 ist als ein Kondensator mit der Kapazität 400 μF ausgebildet. An der Energiespeichereinrichtung liegt die Spannung $V_{ISTAB}$ an, über die die Steuereinrichtung 120 den Ladezustand der Speichereinrichtung 126 ermitteln kann. Über den Widerstand 204, R1, der eine Größe von 3 Ohm aufweist, ist die Energiespeichereinrichtung 126 mit dem Masseanschluss 115 verbunden.

Der Schalter S1 ist zwischen dem Eingangsanschluss 116 und der Energiespeichereinrichtung 126 angeordnet und wird in der Simulationsschaltung zeitlich über die Spannungsquelle 205, V3 gesteuert. Die Spannungsquelle V3, 205 ist an 115 mit dem Masseanschluss GND verbunden. Das von der Spannungsquelle V3, 205 ausgehende Schaltsignal zu S1 entspricht dem Steuersignal 130 welches von der Steuereinheit 120 kommt. Folglich simuliert V3 das Schaltsignal für den Schalter S1. Der Anschluss 115 dient dem korrekten Anschluss des Schalters S1. Der Schalter S1 dient zur Aufschaltung des Energiespeichers 126 auf den Versorgungszweig 116 oder Eingangsanschluss 116. Die Steuereinrichtung 120 und sämtliche Verbraucher mit einem geringen Strombedarf sind als eine Stromsenke I2 dargestellt, welche an der Potentialschiene 127 angeordnet ist. In Fig. 3 entspricht die Versorgungsspannung für die Schaltung $V_{OUT}$ der Versorgungsspannung $V_{DD}$. $V_{BT}$ ist in der Simulation nicht separat geführt und fällt somit mit $V_{OUT}$ zusammen. Auch ist in der Simulation kein Schalter S2 vorgesehen. Die Funktion des Schaltens des Schalters S2 wird in der Simulation von der entsprechend dem Schalten des Schalters S2 gesteuerten Stromsenke I1 erreicht und simuliert. Diese Stromsenke I1 beginnt nach der eingestellten Startzeit die Strompulse des hohen Stromverbrauchers nachzubilden. Dadurch kann auf den Schalter S2 in der Simulation verzichtet werden.

Beispielsweise wird ein Verbraucher mit einem hohen Strombedarf, wie das Funkmodul 104, von der Stromsenke für den Strom I1 in der Simulation dargestellt, welche in einem Pulsbetrieb an- und ausgeschaltet wird, wobei der erste Puls 1,76s nach dem Start der Simulation auftritt. Die Stromsenke I1 bildet die beiden Ströme 10μA als Grundlast und/oder den Standby-Strom für das Bluetoothmodul und 15mA entsprechend dem in der Praxis auftretenden Strom bei eingeschaltetem Bluetoothmodul 104 nach. Die Anstiegszeit für die Stromsenke I1 ist mit 0,01ms und die Abfallzeitfür die Stromsenke I1 ist ebenfalls mit 0,01ms definiert. Die Einschaltdauer des Strompulses ist mit 1ms definiert und die Periodendauer mit 100ms. Es werden 100 Zyklen durchgeführt, wobei die Anzahl der Zyklen nicht beschränkt ist. Somit bildet die Stromsenke I1 den Strombedarf von einem gepulsten Verbraucher 104 oder einer Gruppe von Verbrauchern, beispielsweise eines Funkmoduls 104 oder Flashspeichermediums nach, insbesondere ein Gerät mit temporär hohem Strombedarf.

Die Stromsenke I2, 120 bildet eine im Wesentlichen konstante Last mit 500 μA Stromverbrauch nach und dient im Wesentlichen der Simulation des Strombedarfs der Steuereinrichtung 120. Nachdem der Strombedarf der gepulsten Verbraucher durch die Stromsenke I1, 104 dargestellt ist, kann in der Simulationsschaltung der Fig. 3 der Schalter S2 entfallen. Der Pulsbetrieb bildet das temporäre Einschalten und den damit verbundenen hohen Strombedarf des Funkmoduls nach, zu einer Zeit, wenn der Kondensator 126 zugeschaltet ist. Die Potentialschiene 128 verbindet die Stromsenke 104 mit dem Eingangsanschluss 116. Die zeitliche Abfolge des Schaltens von S1 und der Start des Pulsbetriebs von I1 ist in der Simulation fest eingestellt. Es ist keine separate Timersteuerung oder Spannungsmessung für den Betrieb von S1 vorgesehen. Die Timersteuerung des Aufschaltens des Kondensators 126 wird durch das Zeitverhalten der Spannungsquelle V3 bestimmt. Die Spannungsquelle V3 schaltet S1 nach 1,7s und Stromsenke I1 beginnt nach 1,75s mit dem Pulsbetrieb.

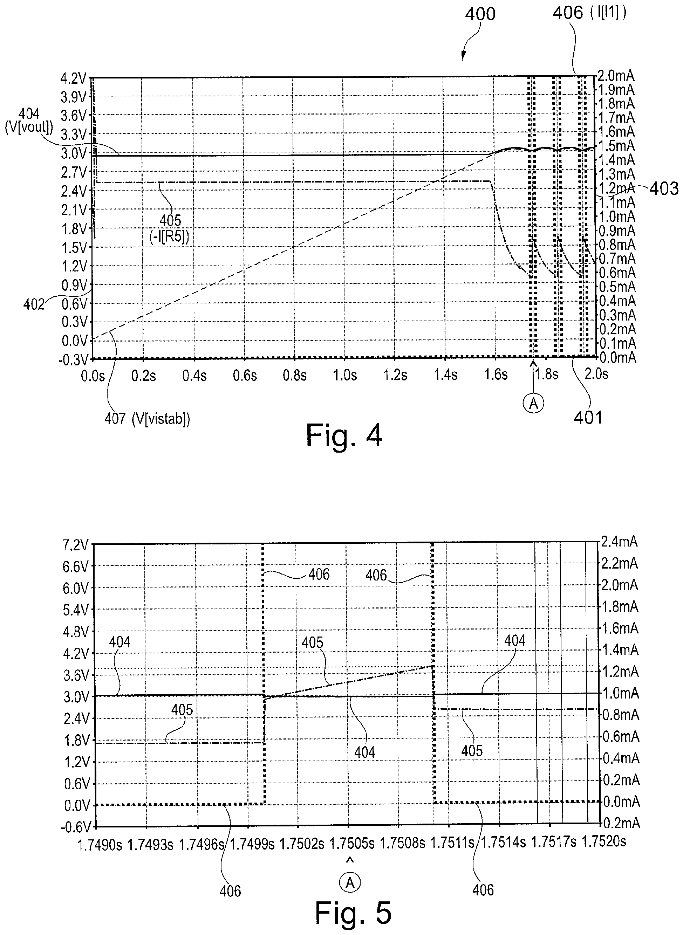

Fig. 4 zeigt ein Auswerteergebnis einer mit der Schaltungsanordnung nach Fig. 3 durchgeführten Simulation, welche die realen und physikalischen Eigenschaften von S1 nachbildet. Die Ergebnisse sind in einem Diagramm 400 dargestellt, welches ein Koordinatensystem mit einer Abszisse 401, mit einer ersten Ordinate 402, welche in Spannungswerten von -0,3 Volt bis +4,2 Volt in 0,3 Voltabständen geeicht ist, und mit einer zweiten Ordinate 403 bildet, welche in Stromwerten von 0,0 mA bis 2,0 mA in 0,1 mA Abständen geeicht ist. Die Abszisse 401 selbst gibt einen Zeitverlauf im Bereich von 0 Sekunden bis 2 Sekunden an, der einen Einschaltprozess umfasst. Wobei der Zeitpunkt 0.0s den Zeitpunkt des Beginns der Simulation darstellt und wobei bei 1,7s, d.h. nach dem vollständigen Laden von Energiespeichereinrichtung 126, durch die Spannungsquelle V3 der Schalter S1 betätigt wird. Der zeitliche Verlauf von V3, also der Verlauf des Zeitverhaltens von S1, ist in Fig. 4 nicht als Kurve dargestellt.

Die Fig. 4 zeigt die Verläufe von der Spannung $V_{OUT}$ 404, welche an der Potentialschiene 127 anliegt. Außerdem ist der Stromverlauf 405, $-I_{R5}$ über den Widerstand R5, 113, dem Vorwiderstand zur Eigensicherheit, dargestellt. Darüber hinaus ist der Stromverlauf der gepulsten Stromsenke I1, 406 dargestellt, d. h. des Geräts mit einem hohen Strombedarf 104. Ferner ist der Spannungsverlauf VISTAB, 407 über der Energiespeichereinrichtung 126 dargestellt, der den Spannungsverlauf bei stabilisiertem Strom angibt. Die Spannung VISTAB, 407 über der Energiespeichereinrichtung 126 steigt aufgrund des konstanten Ladestroms linear an, welcher durch die Strombegrenzung 123 auf einem konstanten Wert gehalten wird. Die Ausgangsspannung $V_{OUT}$, 404 ist bereits nach wenigen Millisekunden auf den Sollwert von etwa 3,1 Volt gestiegen. Durch die Last an I2 mit 500μA ist die Ausgangsspannung $V_{OUT}$, 404 jedoch immer kleiner als 3,1V.

Nach 1,7 Sekunden ist die Energiespeichereinrichtung 126, C1 geladen. D. h. nach 1,7 Sekunden ist die Energiespeichereinrichtung 126 einsetzbar und daher schaltet der Schalter S1. Das Schalten des Schalters S1 ist durch das Schalten der Spannungsquelle 205, V3 simuliert. Dieses Schalten des Schalters S1 erfolgt nach 1,7 Sekunden. Durch das Schalten von Schalter S1 wird die Spannung $V_{OUT}$, 404 mit C1,126 gepuffert. Ab dem Zeitpunkt, ab dem der Schalter S1 geschalten hat, kann die Stromsenke 104, I1 die Ausgangsspannung $V_{OUT}$ mit Stromspitzen von beispielsweise 15 mA belasten, wie mit der Diagrammlinie 406 dargestellt ist. $V_{OUT}$ ist in Fig. 4 als Diagrammlinie 404 dargestellt. Das Einschalten des Verbrauchers mit dem hohen Strombedarf zeigt sich in Fig. 4 durch den rechteckigen und sprungförmigen Verlauf der Kurve 406, welcher bei etwa 1,75 s eingeschaltet und nach 1ms wieder ausgeschaltet wird. Die Spannung $V_{OUT}$, 404 sinkt während des Rechteckimpuls der Strombelastung I1 nur kurz auf etwa 2,95 Volt. Dieser Sachverhalt ist in Fig. 5 detailliert dargestellt. Sofern sämtliche an den Potentialschienen 127, 128 angeschlossene Bauteile oder Komponenten einen solchen Einbruch auf etwa 2,95 Volt vertragen, können sie im Wesentlichen ohne Beeinträchtigung mittels der Verbindungsschaltung betrieben werden. Die Information, ob die jeweiligen Bauteile mit dieser Spannung arbeiten können, ist in den jeweiligen Datenblättern vermerkt. Die Stromkurve 405, $-I_{R5}$, die den Verlauf des Stroms durch den Eingangswiderstand 113c, R5 darstellt, zeigt, dass dieser Strom $-I_{R5}$ einen Maximalwert von 1,28 mA nicht übersteigt. Trotz der hohen Strombelastung durch den Verbraucher 104 mit bis zu 15 mA wird die Spannungsversorgung 200 oder Spannungsquelle 200 nicht mit einem höheren Strom als etwa 1,28 mA belastet, obwohl in der angeschlossenen Elektronik, insbesondere im Verbraucher 104, interne Ströme von 15,5 mA fließen.

Fig. 5 zeigt einen Ausschnitt aus dem Diagramm der Fig. 4 in einem Bereich von 1,7490 bis 1,7520 Sekunden. Aus diesem Abschnitt geht der Strom- und/oder Spannungsverlauf der betrachteten Größen während der hohen Strombelastungen hervor. Der entsprechende Abschnitt ist durch die Bezeichnung A sowohl in Fig. 4 als auch in Fig. 5 gekennzeichnet.

Es zeigt sich in der Simulation, dass die Verbindevorrichtung 102 geeignet ist eine Strombegrenzung durchzuführen, um das Startverhalten von eigensicher versorgten elektronischen Baugruppen zu optimieren.

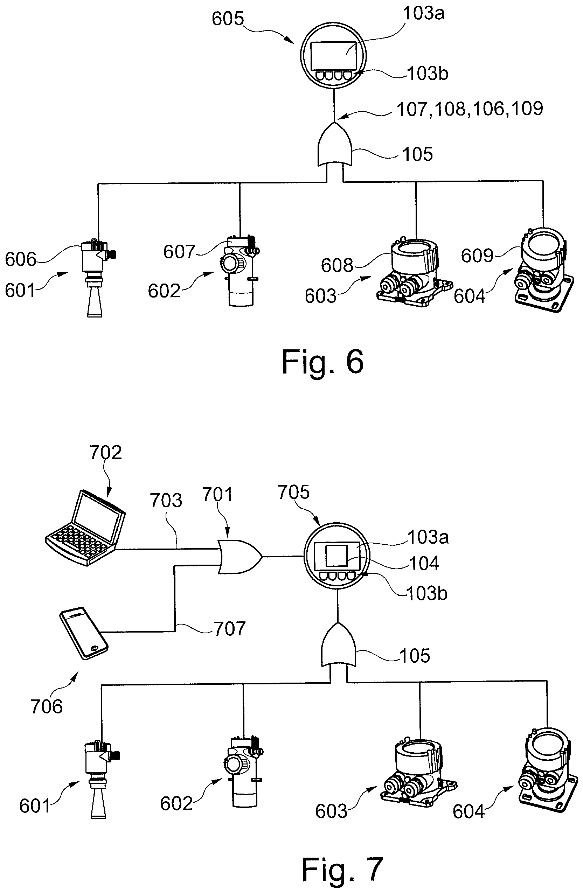

Fig. 6 zeigt den Anschluss einer Anzeigeeinrichtung 103a und einer Eingabeeinrichtung 103b an eine Vielzahl von Feldgeräten 601, 602, 603, 604. Die Anzeigeeinrichtung 103a und die Eingabeeinrichtung 103b, die als Tastenfeld 103b ausgeführt ist, ist in einem runden Bedienelement 605 zusammengefasst, welches jeweils in einem der Feldgeräte 601, 602, 603, 604 in einem Deckel 606, 607, 608, 609 untergebracht werden kann. Der Anschluss an das Feldgerät erfolgt über eine Kontaktfläche 105, welche symbolisch als ein Oder-Glied in Fig. 6 dargestellt ist, um die Austauschbarkeit des Bedienelements für die Vielzahl von Feldgeräten 601, 602, 603, 604 zu symbolisieren. Die Darstellung als Oder-Glied soll kennzeichnen, dass das Modul 605 ausgetauscht werden kann und dass über die Kontaktfläche 105 sowohl Datenleitungen 107, 108 als auch Versorgungsleitungen 106, 109 führen können. Diese Leitungen sind in einem Bus zusammengefasst. Über diesen Bus können sowohl Daten zu 103a geschickt werden als auch der Zustand von 103b an 601, 602, 603, 604 gemeldet werden. Dabei können analoge Signale, digitale Signale, Schaltsignale und/oder Daten ausgetauscht werden. Die Bedienung der Bedieneinrichtung 605 erfolgt vor Ort, da lediglich eine visuelle Information zur Verfügung gestellt wird bzw. taktile Eingabesignale über das Tastenfeld 103b eingegeben werden können.

Die Fig. 7 zeigt eine Eingabeeinrichtung 705, welche neben der Anzeigeeinrichtung 103a und der Eingabeeinrichtung 103b auch noch über eine Funkeinrichtung 104 eine Funkverbindung 701 zur Verfügung stellt. Über die Funkverbindung 701, beispielsweise eine Bluetoothverbindung, kann ein ebenfalls mit einem Funkmodul ausgestatteter Laptopcomputer 702 drahtlos Daten in der Form von analogen Signalen oder digitalen Signalen über die Verbindung 703 austauschen. Taktile und visuelle Signale, d. h. elektromechanische Eingaben, können wie in Fig. 6 vor Ort an dem Bedienelement 705 direkt ausgetauscht werden. Die taktilen Eingaben und visuellen Signale werden über entsprechende Busleitungen und/oder die Kontaktfläche 105 an die jeweiligen Feldgeräte 601, 602, 603, 604 weitergegeben. Eine mobile Eingabeeinrichtung, beispielsweise ein Smartphone 706 mit einer entsprechenden Applikation, kann ebenfalls über eine Funkverbindung 707 mit der Eingabeeinrichtung 705 schnurlos in Kontakt treten und Daten austauschen. Somit kann mit einem entsprechend ausgestatteten Modul 705, beispielsweise über Bluetooth, ein weiterer Betriebsmodus bereitgestellt werden. Neben der Vorortbedienung direkt am Bedienelement 705, beispielsweise über die Anzeigeeinrichtung 103a, 103b, können Information auch von entfernten Stationen 702, 706 mit der Bedieneinrichtung 705 oder mit den Feldgeräten 601, 602, 603 oder 604 ausgetauscht werden.

Fig. 8 zeigt ein Flussdiagramm für ein Verfahren zum Verbinden eines Ausgangsanschlusses mit einem Eingangsanschluss gemäß einem exemplarischen Ausführungsbeispiel der vorliegenden Erfindung. Das Verfahren beginnt in einem Startzustand S801. Beispielsweise nach einem Anschließen einer Stromversorgung erfolgt im Schritt S802 ein kontrolliertes Laden einer Energiespeichereinrichtung über eine Ladeeinrichtung, wobei die der Eingangsanschluss über die Ladeeinrichtung mit der Energiespeichereinrichtung verbunden ist.

Es erfolgt im Schritt S803 ein Erkennen eines vorgebbaren Ladezustandes der Energiespeichereinrichtung und falls der vorgebbare Ladezustand erreicht ist, wird im Schritt S804 die Energiespeichereinrichtung mit dem Eingangsanschluss verbunden.

Im Schritt S805 erfolgt das Verbinden des Eingangsanschlusses mit dem Ausgangsanschluss, während und/oder nach dem Verbinden der Energiespeichereinrichtung mit dem Eingangsanschluss.

Im Schritt S806 endet das Verfahren.


**Patentansprüche**

1. Verbindevorrichtung (102), aufweisend:

   eine Steuereinrichtung (120);
   eine Energiespeichereinrichtung (126);
   einen Eingangsanschluss (116, 127);
   einen Ausgangsanschluss (128);
   wobei der Eingangsanschluss (116, 127) über eine Strombegrenzungseinrichtung (123) mit der Energiespeichereinrichtung (126) verbunden ist, wobei die Energiespeichereinrichtung (126) ein Kondensator ist;
   wobei die Strombegrenzungseinrichtung (123) zum kontrollierten Laden der Energiespeichereinrichtung (126) eingerichtet ist;
   wobei die Steuereinrichtung (120) eingerichtet ist, nach dem Erreichen eines vorgebbaren Ladezustandes der Energiespeichereinrichtung (126), durch Schließen eines ersten Schalters (S1), die Energiespeichereinrichtung (126) mit dem Eingangsanschluss (116, 127) zu verbinden; und
   wobei die Steuereinrichtung (120) eingerichtet ist, während oder nach dem Verbinden der Energiespeichereinrichtung (126) mit dem Eingangsanschluss (116,127), durch Schließen eines zweiten Schalters (S2), der zwischen dem Eingangsanschluss (116, 127) und dem Ausgangsanschluss (128) angeordnet ist, den Eingangsanschluss (116, 127) mit dem Ausgangsanschluss (128) zu verbinden.

2. Verbindevorrichtung (102) nach Anspruch 1,
   wobei die Steuereinrichtung (120) mit dem Eingangsanschluss (116, 127) verbunden ist.

3. Verbindevorrichtung (102) nach einem der Ansprüche 1 oder 2,
   wobei die Steuereinrichtung (120) zum Bestimmen des Ladezustands der Energiespeichereinrichtung (126) einen Timer und/oder einen Spannungsmesser aufweist.

4. Verbindevorrichtung (102) nach einem der Ansprüche 1 bis 3,
   wobei der Eingangsanschluss (116, 127) einen Widerstand (113c) zur Eigensicherheit aufweist.

5. Verbindevorrichtung (102) nach einem der Ansprüche 1 bis 4,
   wobei der Eingangsanschluss (116) als eine Potenzialschiene (127) ausgebildet ist, um eine Einrichtung mit einem geringen Stromverbrauch anzuschließen und/oder wobei der Ausgangsanschluss (128) als eine Potenzialschiene (128) ausgebildet ist, um eine Einrichtung mit einem hohen Stromverbrauch anzuschließen.

6. Verbindevorrichtung (102) nach einem der Ansprüche 1 bis 5, wobei die Energiespeichereinrichtung (126) so bemessen ist, für eine vorgebbare Zeit einen vorgebbaren Strom bereitzustellen.

7. Feldgerät, aufweisend:

eine Stromversorgung (200);
eine Funkeinrichtung (104);
eine Verbindevorrichtung (102) nach einem der Ansprüche 1 bis 6;
wobei die Stromversorgung (200) mit dem Eingangsanschluss (116, 127) der Verbindevorrichtung verbunden ist;
wobei die Funkeinrichtung (104) mit dem Ausgangsanschluss (128) der Verbindevorrichtung (102) verbunden ist.

8. Verfahren zum Verbinden eines Ausgangsanschlusses (128) mit einem Eingangsanschluss (116, 127), aufweisend die Schritte:

kontrolliertes Laden einer Energiespeichereinrichtung (126) über eine Strombegrenzungseinrichtung (123), wobei die der Eingangsanschluss (116, 127) über die Strombegrenzungseinrichtung (123) mit der Energiespeichereinrichtung (126) verbunden ist, wobei die Energiespeichereinrichtung (126) ein Kondensator ist;
Erkennen eines vorgebbaren Ladezustandes der Energiespeichereinrichtung (126);
Verbinden, durch Schließen eines ersten Schalters (S1), der Energiespeichereinrichtung (126) mit dem Eingangsanschluss (116, 127), nach dem Erreichen des vorgebbaren Ladezustandes; und
Verbinden, durch Schließen eines zweiten Schalters (S2), der zwischen dem Eingangsanschluss (116, 127) und dem Ausgangsanschluss (128) angeordnet ist, des Eingangsanschlusses (116, 127) mit dem Ausgangsanschluss (128), während oder nach dem Verbinden der Energiespeichereinrichtung (126) mit dem Eingangsanschluss (116, 127).

**Claims**

1. A connecting device (102) comprising:

a control device (120);
an energy storage device (126); and
an input port (116, 127);
an output terminal (128);
the input terminal (116, 127) being connected to the energy storage means (126) via a current limiting means (123), wherein the energy storage means (126) is a capacitor;
wherein the current limiting means (123) is configured for controlled charging the energy storage means (126);
the control device (120) being configured to connect the energy storage device (126) to the input connection (116, 127) after the energy storage device (126) has reached a predefinable state of charge by closing a first switch (S1); and
the control device (120) being configured, during or after the connection of the energy storage device (126) to the input connection (116, 127), to connect the input connection (116, 127) to the output connection (128) by closing a second switch (S2) which is arranged between the input connection (116, 127) and the output connection (128).

2. The connecting device (102) according to claim 1,
wherein the control device (120) is connected to the input port (116, 127).

3. The connection device (102) according to any one of claims 1 or 2, wherein the control device (120) comprises a timer and/or a voltmeter for determining the state of charge of the energy storage device (126).

4. The connection device (102) according to any one of claims 1 to 3, wherein the input terminal (116, 127) comprises a resistor (113c) for intrinsic safety.

5. The connection device (102) according to any one of claims 1 to 4, wherein the input terminal (116) is formed as a potential rail (127) for connecting a device having a low power consumption and/or wherein the output terminal (128) is formed as a potential rail (128) for connecting a device having a high power consumption.

6. The connection device (102) according to any one of claims 1 to 5, wherein the energy storage device (126) is dimensioned to provide a predeterminable current for a predeterminable time.

7. A field device comprising:

a power supply (200);
a radio device (104);
a connection device (102) according to any one of claims 1 to 6;
wherein the power supply (200) is connected to the input terminal (116, 127) of the connecting device;
wherein the radio device (104) is connected to the output terminal (128) of the connecting device (102).

8. A method of connecting an output port (128) to an input port (116, 127), comprising the steps of:

controlled charging of an energy storage device (126) via a current limiting device (123), wherein the input terminal (116, 127) is connected to the energy storage device (126) via the current limiting device (123), wherein the energy storage device (126) is a capacitor;
detecting a predeterminable state of charge of the energy storage device (126);
connecting, by closing a first switch (S1), the energy storage device (126) to the input terminal (116, 127) after the predeterminable state of charge has been reached; and
connecting, by closing a second switch (S2) located between the input terminal (116, 127) and the output terminal (128), the input terminal (116, 127) to the output terminal (128) during or after connecting the energy storage device (126) to the input terminal (116, 127).

**Revendications**

1. Dispositif de connexion (102), présentant :

un moyen de commande (120) ;
un moyen de stockage d'énergie (126) ;
une borne d'entrée (116, 127) ;
une borne de sortie (128) ;
dans lequel la borne d'entrée (116, 127) est connectée au moyen de stockage d'énergie (126) par l'intermédiaire d'un moyen de limitation de courant (123), dans lequel le moyen de stockage d'énergie (126) est un condensateur ;
dans lequel le moyen de limitation de courant (123) est conçu pour charger de manière contrôlée le moyen de stockage d'énergie (126) ;
dans lequel le moyen de commande (120) est conçu, après qu'un état de charge prédéfinissable du moyen de stockage d'énergie (126) a été atteint, pour connecter le moyen de stockage d'énergie (126) à la borne d'entrée (116, 127) par fermeture d'un premier commutateur (S1) ; et
dans lequel le moyen de commande (120) est conçu, pendant ou après la connexion du moyen de stockage d'énergie (126) à la borne d'entrée (116, 127), pour connecter la borne d'entrée (116, 127) à la borne de sortie (128) par fermeture d'un second commutateur (S2) qui est disposé entre la borne d'entrée (116, 127) et la borne de sortie (128).

2. Dispositif de connexion (102) selon la revendication 1, dans lequel le moyen de commande (120) est connecté à la borne d'entrée (116, 127).

3. Dispositif de connexion (102) selon l'une des revendications 1 ou 2,
dans lequel le moyen de commande (120) présente une minuterie et/ou un voltmètre pour déterminer l'état de charge du moyen de stockage d'énergie (126).

4. Dispositif de connexion (102) selon l'une des revendications 1 à 3,
dans lequel la borne d'entrée (116, 127) présente une résistance (113c) pour la sécurité intrinsèque.

5. Dispositif de connexion (102) selon l'une des revendications 1 à 4,
dans lequel la borne d'entrée (116) est réalisée sous la forme d'une barre de potentiel (127) pour raccorder un moyen ayant une faible consommation électrique et/ou dans lequel la borne de sortie (128) est réalisée sous la forme d'une barre de potentiel (128) pour raccorder un moyen ayant une forte consommation électrique.

6. Dispositif de connexion (102) selon l'une des revendications 1 à 5,
dans lequel le moyen de stockage d'énergie (126) est dimensionné pour fournir un courant prédéfinissable pendant un temps prédéfinissable.

**7.** Appareil de terrain, présentant :

une alimentation électrique (200) ;
un moyen radio (104) ;
un dispositif de connexion (102) selon l'une des revendications 1 à 6 ;
dans lequel l'alimentation électrique (200) est connectée à la borne d'entrée (116, 127) du dispositif de connexion ;
dans lequel le moyen radio (104) est connecté à la borne de sortie (128) du dispositif de connexion (102).

**8.** Procédé de connexion d'une borne de sortie (128) à une borne d'entrée (116, 127), comprenant les étapes consistant à :

charger de manière contrôlée un moyen de stockage d'énergie (126) par l'intermédiaire d'un moyen de limitation de courant (123), dans lequel la borne d'entrée (116, 127) est connectée au moyen de stockage d'énergie (126) par l'intermédiaire du moyen de limitation de courant (123), dans lequel le moyen de stockage d'énergie (126) est un condensateur ;
détecter un état de charge prédéfinissable du moyen de stockage d'énergie (126) ;
connecter, par fermeture d'un premier commutateur (S1), le moyen de stockage d'énergie (126) à la borne d'entrée (116, 127) après que l'état de charge prédéfinissable a été atteint ; et
connecter, par fermeture d'un second commutateur (S2), qui est disposé entre la borne d'entrée (116, 127) et la borne de sortie (128), la borne d'entrée (116, 127) à la borne de sortie (128) pendant ou après la connexion du moyen de stockage d'énergie (126) à la borne d'entrée (116, 127).

Fig. 1

S801

S802

S803

S804

S805

S806

Fig. 8

127 VDD

180

129a

130

S1

126

115

124

123

122

116

113c 150

112c

115

117

106

Fig. 2

18

Fig. 3

EP 3 177 898 B1

19

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5898234 A
- US 2009066161 A